# EUROPEAN PATENT SPECIFICATION

(11) **EP 0 801 860 B1**
(45) Date of publication and mention of the grant of the patent: **03.03.2004**
(21) Application number: 95942814.5
(22) Date of filing: 21.12.1995
(51) Int. Cl.: H04M 3/42

(54) **DEVICE FOR CONSTRUCTION OF SERVICE IN TELE- AND/OR DATA COMMUNICATIONS SYSTEM**
VORRICHTUNG ZUR BILDUNG VON EINEM DIENST IN EINEM TELEKOMMUNIKATIONS- UND /ODER DATENKOMMUNIKATIONSSYSTEM
DISPOSITIF PERMETTANT LA CONSTITUTION D'UN SERVICE DANS UN SYSTEME DE TELECOMMUNICATIONS ET/OU DE COMMUNICATIONS DE DONNEES

(30) Priority: 05.01.1995 SE 9500033
(43) Date of publication of application: 22.10.1997
(73) Proprietor: TELIA AB, 123 86 Farsta (SE)
(72) Inventor: NYCKELG RD, Sören, S-448 34 Floda (SE)
(74) Representative: Hopfgarten, Nils
(86) International application number: PCT/SE1995/001562
(87) International publication number: WO 1996/021310

(56) References cited:
- TELECOMMUNICATIONS, May 1992, SIMON LITTLEJOHN, "Developing a Universal Personal Telecommunication Service", pages 39-42.
- INTERNATIONAL ZURICH SEMINAR ON DIGITAL COMMUNICATIONS, March 1992, (New York), ST. ABRAMOWSKI et al., "A Service Creation Environment for Intelligent Networks", pages 147-163.

## Description

### TECHNICAL FIELD

The present invention relates to a device for construction of services in telecommunications system of type AXE, where the respective service is constructable by means of function modules each of which executes a part function of the total function of the service and each function module with associated part function is reusable for one or more different services.

### PRIOR ART

Devices of the above general type are disclosed in Telecommunications, May 1992, Simon Littlejohn, "Developing Universal Personal Telecommunication Service", pages 39-42 and International Zürich Seminar on Digital Communication, March 1992, (New York), St. Abramowski et. al., "A Service Creation Environment for Intelligent Networks," pages 147-163.

It is previously known that, in connection with tele- and datacommunications services, tele- and datacommunications networks can be created with AXE-technology by linking up Service Independent Buildingblocks (SIB) to a block constellation, which constitutes a complete service. Respective service is administratively connected to a subscription and consequently subscriber unique data information is arranged for respective subscriber or customer.

It is also previously known that an individual as well as a group of individuals, for instance a company, can be subscriber to the service in question.

### DESCRIPTION OF THE INVENTION

### TECHNICAL PROBLEM

There is a wish for a more sophisticated way of operation regarding construction and selection of services which are offered the subscribers or customers of the system. The invention aims at solving this problem.

The selection and wishes for more advanced and multifaceted services also exist and cannot be provided with the so far suggested principles for construction of the services. The invention also solves this problem.

Respective block constellation shall be validated and approved before being taken into use. Small variations in the services offered the customers must be allotted own unique link-ups, which essentially increase the multitude of the block constellations which respective, according to existing rules, must be validated each individually. This is a technically not practicable way. The invention also solves this problem and gives instructions on possibilites for a varied offer of services, without complicated and in time extended validation proceedings needed to be used for respective service.

In this connection subscriptions shall be possible to offer customers where these can separate their private use of the system, company associated use of the system, international and national use of the system etc. The invention also solves this problem.

### THE SOLUTION

According to the invention the above-mentioned problems are solved by a device of the kind defined in the introductory portion of the description and having the characterizing features of claim 1.

The device according to the invention is thus a modular construction. The respective function modules with its associated part function constitutes a unit in the system which is subscribable by the subscriber in question. Furthermore, this unit preferably forms a multi-usable unit which is once and for all validated multi-usable unit.

Consequently one and the same unit can be utilized for construction/linking up of two, three or more services to one and the same or different customers/subscribers.

In one embodiment the service can create or consist of audio response, pay call, virtual private network, or account call. As an example the respective modules can execute part functions comprising geographical control function, time control function, call connection function, authorization function etc. The module executing the respective part function can administratively be provided respective subscriber or customer, who subscribes two or more modules which in linked up state executes the service wanted by the customer.

According to an advantageous embodiment of the device accordint to the invention a first unit executing a first total function comprises an authorization module which is linked up with other modules for speech control, number information, call connection function, and/or other related functions in the system.

A module executing its part function can store customer- or group unique data, which by a previously mentioned link-up procedure can be made available for a number of from each other in other respects independent services. Examples of the mentioned application are when services of type account call and "VPN Remote Access" use the same access card with associated PIN-code for identity control.

In a corresponding way group common data can be made available for individually related services.

### AVANTAGES

According to the invention it will be possible to execute time function(s), function for geographical division, sequential control, "call gaping", gathering of statistics etc. The services are constructed in a modular way to a greater extent than what has previously been possible. The modules are validated each individually, which implies that no new validations need to be performed when the modules are multi- or reused in a renewed service construction. The modules accordingly represent logical functions, and the new invention is based on the platform established by the system according to AXE. The mentioned modules can also be regarded as nodes. By double or multi-use according to the now suggested principle, large amounts of data capacity will be possible spare in the data memories. Different data levels, for instance for the individual respective company technical use will be possible. An individual service can be changed into a company associated one or vice versa.

### DESCRIPTIONS OF FIGURES

One at present suggested embodiment of a device showing the for the invention significant characteristics will be described in the following with references to the enclosed drawings where
- Figure 1: in the form of a principal diagram shows a modular system for construction of services in telecommunications system according to known construction,
- Figure 2: in the form of a principal diagram shows the construction according to the new device, and
- Figure 3: in the form of a principal diagram shows the principles for the construction of the specifically indicated services in the form of account call and VPN remote access.

### DETAILED EMBODIMENT

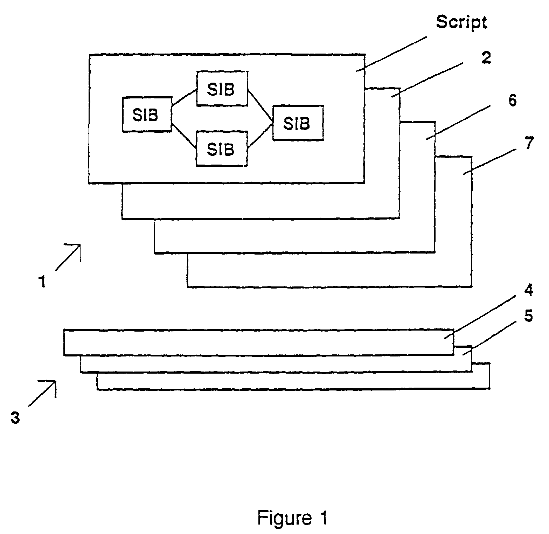

In Figure 1 is shown a known construction of the modular system according to AXE by 1. The services consist of a number of SIB-modules arranged in a so called script. This script is locked and unique for a selected service 2. An administrative system 3 exists for customers or subscribers who subscribe to the mentioned by modules constructed services, at which 4 shows the space (customer box) for a first customer/subscriber, 5 shows the space for a second customer or subscriber etc. In the Figure 1 are shown by 6 and 7 further customer unique services.

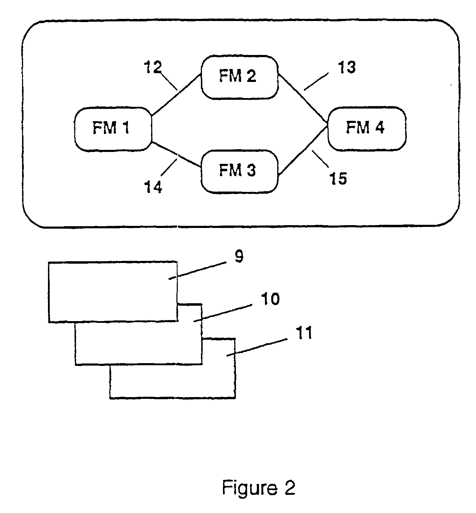

The subscribable unit constructed of SIB-modules which in Figure 1 constitutes a "service", in Figure 2 instead constitutes one according to the invention service independent subscribable function module, (FM). Figure 2 shows how a number of each individually subscribable function modules, FM1, FM2, FM3 and FM4, are linked up to a service 8. The individual 9, 10 or group 11 for which respective module stores data subscribes to the module in question. Please at that notice, that modules with group data can be linked up to modules which store individual data.

The link-ups 12, 13, 14 and 15 of function modules are preferably made with in respective module stored customer unique data. This results in possibility to vary the link picture with respect to number and type of modules, depending on the individual customer's application of the service in question.

In the embodiment example according to Figure 2, the module FM1 can relate to a module as branches of geographical origin. The modules FM2 and FM3 can consist of time control modules which, in for instance a temporary transfer service, can supply switching to different localities at different times. The module FM4 can consist of a call connection module.

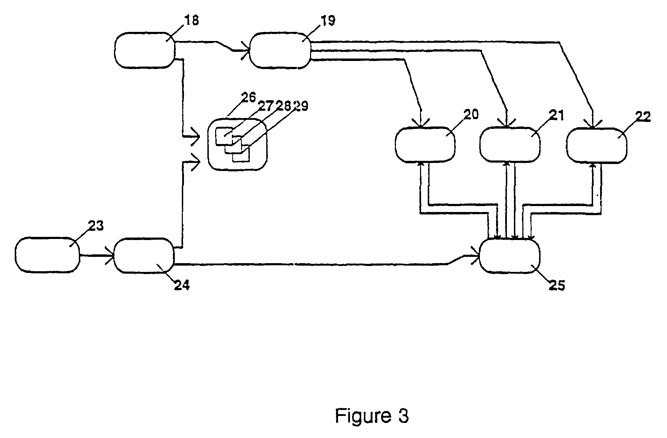

In the Figure 3 is shown example of two by modules constructed services, at which the first service 16 is referable to "Telia access account call", and the second service is referable to "Telia intercall 1000". The customer in question at that subscribes to a first script module 18 which constitutes a "log-in" or authorization module. Furthermore the customer subscribes to a module 19 which can consist of a module which executes speech control. The speech control module 19 is linked up to modules 20 for number information, 21 for call connection, and 22 for other functions of current interest in the system.

Shall the customer in addition subscribe to the service "Telia intercall 1000", several of the mentioned modules can be multi-used or reused. The access module is represented by 23. Also in this case a log-in module, 24, is used. A module 25 is connected to the modules 20, 21 and 22 for double use of the last mentioned modules. In the present case there is also an administrative customer register 26, where respective subscriber 27, 28 and 29 are supplied with subscriber information about the involved modules 18, 19....25. Respective customer space 27, 28 and 29 contains among other things data/information about the customer's smart-card, subscriber information on the card and identification functions. By the arrangement essential memory space can be spared. Furthermore registrations which has been performed by one service can be used by other services, for instance blocking of smart-cards due to abuse blocks all services connected to the card in question.

The invention is not restricted to the above as example shown embodiment but may be subject to modifications within the frame of the following patent claims.

## Claims

1. Device for construction of services in telecommunications systems of type AXE, where the respective service is constructed by means of function modules (FM) each of which executes a part function of the total function of the service, and each function module (FM1...FM4) with associated part function is reusable or multi-usable for one or more different services, wherein a first authorization or log-in module (18) is linked up with other modules (19, 20, 21, 22) for speech control, number function, call connection function and/or other related functions in the system for producing a first service, in that a second log-in module (24) for a second service is connected to a connection module (25) connected to said other modules for producing said second service, by double use of said other modules, and in that an administrative customer register (26) is provided wherein respective subscriber spaces (27, 28, 29) are supplied with module information and contain customer information as well as identification functions, **characterized in that** said log-in modules (18, 24) are connected to said administrative customer register to use already performed customer registrations by one service for the other service.

2. Device according to the claim 1, **characterized in that** the services consist of audio response, pay call, virtual private network, or account call, and **in that** the same modules are included in different link-ups for executing different services.

3. Device according to the claim 1 or 2, **characterized in that** the part functions executed by the respective modules comprise control functions for geographical grouping, time control function or connection function.

4. Device according to any of the previous claims, **characterized in that** function modules executing two or more part functions of the total function of a service are arranged to be associated with a subscriber intending to subscribe the service.

5. Device according to any of the previous claims, **characterized in that** the function modules cooperating in a service relate to different customers or groups of customers in their respective subscriptions, when the service is based on individual as well as group related data.

6. Device according to any of the previous claims, **characterized in that** means are provided to make individual- or group related data available for several independent services by linking up the same subscription to a function module in more than one service.

## Patentansprüche

1. Einrichtung zur Konstruktion von Diensten in Telekommunikationssystemen des Typs AXE, wo der entsprechende Dienst mit Hilfe von Funktionsmodulen (FM) konstruiert wird, von denen jeder eine Teilfunktion der totalen Gesamtfunktion des Dienstes ausführt, und wobei jeder Funktionsmodul (FM1...FM4) mit damit verknüpfter Teilfunktion wiederbenutzbar oder vielfachbenutzbar für einen oder mehrere unterschiedliche Dienste ist, wobei ein erster Authorisierungs- oder Anmeldemodul (18) mit anderen Modulen (19, 20, 21, 22) für Sprachsteuerung, Nummerfunktion, Rufverbindungsfunktion und/oder andere damit zusammenhängende Funktionen im System zum Erzeugen eines ersten Dienstes verbunden ist oder wird, daß ein zweiter Anmeldemodul (24) für einen zweiten Dienst mit einem Verbindungsmodul (25) verbunden ist, der mit den anderen Modulen verbunden ist, um den zweiten Dienst zu erzeugen durch doppelte Verwendung der anderen Module, und daß ein Verwaltungskundenregister (26) vorgesehen ist, in dem entsprechende Teilnehmerräume (27, 28, 29) mit Modulinformationen gespeist werden und Kundeninformation und auch Identifikationsfunktionen enthalten, **dadurch gekennzeichnet, daß** die Anmeldemodule (18, 24) mit dem Verwaltungskundenregister verbunden sind, um bereits durchgeführte Kundenregistrierungen durch einen Dienst für den anderen Dienst zu verwenden.

2. Einrichtung nach Anspruch 1, **dadurch gekennzeichnet, daß** die Dienste aus Audioantwort, zahlungspflichtigem Ruf, virtuellem privaten Netzwerk oder Kontoruf bestehen und daß dieselben Module in unterschiedlichen Verbindungen zum Ausführen von unterschiedlichen Diensten eingeschlossen sind.

3. Einrichtung nach Anspruch 1 oder 2, **dadurch gekennzeichnet, daß** die Teilfunktionen, die durch die entsprechenden Module ausgeführt werden, Steuerfunktionen für geographische Gruppierung, Zeitsteuerfunktion oder Verbindungsfunktion einschließen.

4. Einrichtung nach einem der vorangehenden Ansprüche, **dadurch gekennzeichnet, daß** Funktionsmodule, die zwei oder mehr Teilfunktionen der Gesamtfunktion eines Dienstes ausführen, so ausgebildet sind, daß sie mit einem Teilnehmer verknüpft werden oder sind, der beabsichtigt, an dem Dienst teilzunehmen.

5. Einrichtung nach einem der vorangehenden Ansprüche, **dadurch gekennzeichnet, daß** die Funktionsmodule, die in einem Dienst zusammenwirken, sich auf unterschiedliche Kunden oder Gruppen von Kunden in ihren entsprechenden Abonnementen oder Teilnehmereintragungen beziehen, wenn der Dienst sowohl auf individuellen als auch auf gruppenbezogenen Daten beruht.

6. Einrichtung nach einem der vorangehenden Ansprüche, **dadurch gekennzeichnet, daß** Mittel vorgesehen sind, um individuelle oder gruppenbezogene Daten für mehrere unabhängige Dienste verfügbar zu machen, indem dasselbe Abonnement oder dieselbe Teilnehmereintragung zu einem Funktionsmodul in mehr als einem Dienst verbunden wird.

## Revendications

1. Dispositif pour construire des services dans des systèmes de télécommunications du type AXE, dans lequel le service en question est construit au moyen de modules fonctionnels (MF) exécutant chacun une fonction partielle de la fonction totale du service et chaque module fonctionnel (MF1...MF4) avec sa fonction partielle associée est réutilisable ou polyvalent dans un ou plusieurs services différents, dans lequel un premier module d'autorisation ou d'ouverture de session (18) est associé à d'autres modules (19, 20, 21, 22) chargés de la régulation de la vitesse d'élocution, de la fonction de numérotation, de la fonction d'établissement d'appel et/ou d'autres fonctions connexes du système servant à produire un premier service, dans lequel un second module d'ouverture de session (24) servant à un second service est connecté à un module de connexion (25) connecté auxdits autres modules afin de produire ledit second service, en faisant double usage desdits autres modules, et dans lequel on fournit un registre administratif des clients (26) dans lequel les différents espaces abonnés (27, 28, 29) respectifs reçoivent les informations modulaires et contiennent des informations sur les clients ainsi que des fonctions d'identification, **caractérisé en ce que** lesdits modules d'ouverture de session (18, 24) sont connectés audit registre administratif des clients afin d'utiliser les souscriptions de clients déjà réalisées par un service pour l'autre service.

2. Dispositif selon la revendication 1, **caractérisé en ce que** les services consistent en une réponse vocale, en un appel prépayé, en un réseau privé virtuel ou en un appel comptabilisé, et **en ce que** ce sont les mêmes modules qui sont associés de différentes manières pour réaliser différents services.

3. Dispositif selon la revendication 1 ou 2, **caractérisé en ce que** les fonctions partielles exécutées par les modules respectifs comprennent la fonction de contrôle du regroupement géographique, la fonction de contrôle du temps d'appel ou la fonction de connexion.

4. Dispositif selon l'une quelconque des revendications précédentes, **caractérisé en ce que** les modules fonctionnels exécutant au moins deux fonctions partielles de la fonction totale d'un service sont agencés de manière à être associés à un abonné essayant de souscrire au service.

5. Dispositif selon l'une quelconque des revendications précédentes, **caractérisé en ce que** les modules fonctionnels collaborant pour un même service associent différents clients ou groupes de clients lors de leurs souscriptions respectives, suivant que le service se base sur des données relatives à l'individu ou au groupe.

6. Dispositif selon l'une quelconque des revendications précédentes, **caractérisé** en ce des moyens sont offerts pour rendre disponibles les données relatives à l'individu ou au groupe dans différents services indépendants en associant la même souscription à un module fonctionnel à plus d'un service.
